(19) Europäisches Patentamt
European Patent Office
Office européen des brevets

(11) **EP 1 586 909 B1**

(12) **EUROPÄISCHE PATENTSCHRIFT**

(45) Veröffentlichungstag und Bekanntmachung des Hinweises auf die Patenterteilung:
**02.05.2007 Patentblatt 2007/18**

(51) Int Cl.:
*G01R 17/10* (2006.01)　　*G01L 1/22* (2006.01)
*G01L 25/00* (2006.01)　　*G01R 31/28* (2006.01)
*G01R 35/00* (2006.01)

(21) Anmeldenummer: **05090032.3**

(22) Anmeldetag: **15.02.2005**

(54) **Verfahren zur Erfassung einer Offsetdrift bei einer Wheatstone-Messbrücke**

Method of determining the offset drift of a Wheatstone bridge

Procédé pour déterminer la dérive du point zéro d'un pont de Wheatstone

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **20.02.2004 DE 102004008850**
**16.11.2004 DE 102004056133**

(43) Veröffentlichungstag der Anmeldung:
**19.10.2005 Patentblatt 2005/42**

(73) Patentinhaber:
• **Fraunhofer-Gesellschaft zur Förderung der angewandten Forschung e.V.**
**80686 München (DE)**
• **Intelligente Sensorsysteme Dresden GmbH**
**01109 Dresden (DE)**

(72) Erfinder:
• **König, Peter**
**01109 Dresden (DE)**
• **Krone, Stefan**
**01129 Dresden (DE)**
• **Woschech, Stefan Dr.**
**01328 Dresden (DE)**
• **Böhm, Matthias**
**01326 Dresden (DE)**
• **Schroth, Andreas Dr.**
**01187 Dresden (DE)**

(74) Vertreter: **Pfenning, Meinig & Partner GbR Patent- und Rechtsanwälte Joachimstaler Strasse 10-12 10719 Berlin (DE)**

(56) Entgegenhaltungen:
EP-A- 1 191 343　　　DE-A1- 10 133 525
DE-C1- 4 412 982

## Beschreibung

Die Erfindung betrifft ein Verfahren nach dem Oberbegriff des Anspruchs 1.

Aus der DE 101 33 525 A1 ist ein insbesondere zum Messen von Druck ausgebildeter Sensor mit einer resistiven Messbrücke, deren Diagonalspannung zur Ermittlung der Messgröße abgegriffen wird, bekannt. Zur Überprüfung der Funktionsfähigkeit der einzelnen Brückenelemente ist eine Schalteinrichtung vorgesehen, mit der die Messbrücke zwischen einem Messbetrieb und einem Testbetrieb umgeschaltet werden kann, wobei sich die relative Anordnung der Brückenelemente zueinander ändert. Die Umschaltung erfolgt in der Weise, dass die im Messbetrieb in Reihe geschalteten Brückenelemente im Testbetrieb parallel zueinander geschaltet sind. Insbesondere sind zwei Schalter vorgesehen, die jeweils mit einem Mittenknoten der Messbrücke verbunden sind, an denen die Diagonalspannung abgegriffen wird. Über den zugeordneten Schalter wird jeder Mittenknoten im Testbetrieb mit einer Konstantstromquelle verbunden. Eine wesentliche Eigenschaft dieses Sensors besteht darin, dass die Diagonalspannung der Messbrücke im Testbetrieb von einer Veränderung der Messgröße unabhängig ist.

Durch die Verwendung der Konstantstromquellen ist der bekannte Sensor aufwendig, wobei, wenn die Stromquelle keinen extrem hohen Gleichlauf aufweisen, die Driftermittlung beeinträchtigt wird und ein verwertbares Signal erst bei relativ großer Offsetdrift sicher detektierbar ist. Auch weist dieser Sensor grundsätzlich keine große Empfindlichkeit bei der Drifterfassung auf.

Ein weiteres Verfahren zur Fehlerprüfung von Wheatstone'schen Messbrücken ist aus der DE 44 12 982 C1 bekannt.

Es ist daher die Aufgabe der vorliegenden Erfindung, ein Verfahren zur Erfassung einer Offsetdrift bei einer resistiven Wheatstone-Messbrücke, die zwischen einem Messbetrieb und einem Testbetrieb umschaltbar ist, ohne die innere Struktur der Messbrücke zu verändern, anzugeben, dass eine einfache Testvorrichtung benötigt und mit hoher Genauigkeit arbeitet.

Diese Aufgabe wird erfindungsgemäß gelöst durch ein Verfahren mit den Merkmalen des Anspruchs 1. Vorteilhafte Weiterbildungen des erfindungsgemäßen Verfahrens ergeben sich aus den abhängigen Ansprüchen.

Dadurch, dass im Testbetrieb zwei im Messbetrieb in verschiedenen Brückenzweigen liegende, gleichartig wirkende Sensorwiderstände in Reihe geschaltet werden und ein in der Verbindung dieser Sensorwiderstände auftretender Spannungswert mit einer Bezugsspannung verglichen wird, wird der Umstand ausgenutzt, dass sich das Teilerverhältnis von zwei gleichartigen Widerständen in Reihenschaltung nicht ändert, wenn sich beide Widerstände durch die Messgröße und etwaige Störgrößen im selben Verhältnis ändern. Gleichartig bedeutet hier, dass sowohl die Nennwerte der beiden Sensorwiderstände ungefähr gleich sind als auch ihre Koeffizienten für die verschiedenen Abhängigkeiten (Temperatur, Druck, usw.) den gleichen Wert haben. Dabei bleiben die durch die Messgröße und die Störgrößen verursachten Widerstandsänderungen an beiden Widerständen in einem (weitgehend) konstanten Verhältnis und ändern somit das Teilerverhältnis der Reihenschaltung nur unbedeutend.

Nur die Veränderung an einem der Sensorwiderstände, die sich auch in einer entsprechenden Offsetdrift auswirkt, ändert dieses Verhältnis und wird so weitgehend unabhängig von anderen Einflüssen nachweisbar.

Um den Einfluss des in der Reihenschaltung zwischen den beiden gleichwertig wirkenden Widerständen angeordneten, andersartig wirkenden Widerstands auszuschalten, wird dieser im Testbetrieb vorzugsweise überbrückt. Sollte er trotz Überbrückung noch einen nicht zu vernachlässigenden Wert haben, dann kann sein Einfluss durch rechnerische Ermittlung einer Mittenspannung zwischen den beiden gleichartig wirkenden Widerständen weiter verringert oder sogar ganz beseitigt werden.

Da der jeweilige Schaltzustand im Testbetrieb immer ein Paar von gleichartigen Widerständen prüfen kann, ist das Verfahren vorteilhaft so ausgestaltet, dass der Testbetrieb derart umschaltbar ist, dass die beiden Paare von jeweils gleichartig wirkenden Widerständen der Messbrücke nacheinander geprüft werden.

Die Erfindung wird im Folgenden anhand eines in den Figuren dargestellten Ausführungsbeispiels näher erläutert. Es zeigen:

Fig. 1    eine Wheatstone-Messbrücke im Messbetrieb,

Fig. 2    die Wheatstone-Messbrücke nach Fig. 1 im ersten Schaltzustand des Testbetriebs, und

Fig. 3    die Wheatstone-Messbrücke nach Fig. 1 im zweiten Schaltzustand des Testbetriebs.

Das vorliegende Verfahren kann zur Erkennung einer Offsetdrift bei allen Sensoren, die zur Ermittlung der Messgröße eine resistive Wheatstone-Messbrücke mit mindestens zwei gleichartigen sensitiven Elementen verwenden, genutzt werden. Besonders bei sicherheitskritischen Anwendungen wie Druckmessung im Automobilbereich oder Prozessautomation, bei denen die Verfälschung der Messwerte durch Drifteinflüsse schwerwiegende Konsequenzen haben kann, ist eine solche Erkennung wichtig.

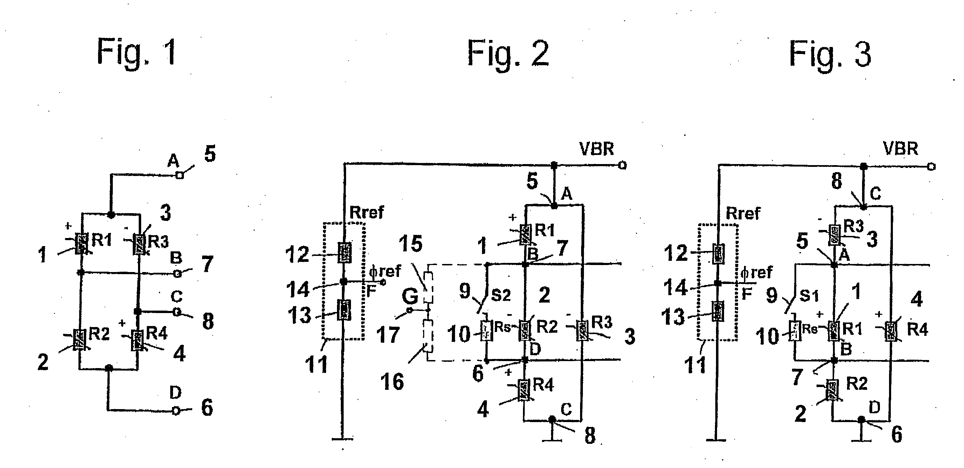

Die Wheatstone-Messbrücke nach Fig. 1 weist in bekannter Weise zwei Paare von jeweils gleichartig auf eine Messgröße wie Druck oder Temperatur ansprechenden Widerständen 1 bis 4 auf, wobei die Widerstände eines Paares, d.h., die Widerstände 1 und 4 oder die Widerstände 2 und 3 sich in gleichem Sinne verändern. So erfahren bei einer Erhöhung der Messgröße beispielsweise die Widerstände 1 und 4 eine positive und die Widerstände 2 und 3 eine negative Veränderung ihrer Widerstandswerte. Die jeweils gleichartigen Widerstände befinden sich diagonal zueinander in verschiedenen Brückenzweigen, die sich parallel zueinander zwischen den beiden Versorgungsanschlüssen 5 und 6 befinden.

Die Messbrücke kann auch so ausgebildet sein, dass nur eines der Paare von gleichartigen Widerständen auf die Messgröße anspricht, beispielsweise nur die Widerstände 1 und 4, während die Widerstände 2 und 3 durch die Messgröße nicht beeinflusst werden. Hierdurch wird jedoch die Messempfindlichkeit der Messbrücke herabgesetzt.

Zwischen den beiden Messanschlüssen 7 und 8 wird die von der Messgröße abhängige Messspannung abgenommen.

Bei der Umschaltung aus dem in Fig. 1 gezeigten Messbetrieb in den in Fig. 2 bzw. Fig. 3 gezeigten Testbetrieb wird die innere Struktur der Messbrücke nicht verändert. Dies ist wichtig, da die einzelnen Widerstände normalerweise bereits vom Hersteller zu der Messbrücke verbunden wurden und somit nicht mehr einzeln auf diese zugegriffen werden kann. Für einen Zugriff stehen nur die Versorgungsanschlüsse 5 und 6 sowie die Messanschlüsse 7 und 8 zur Verfügung.

Die zur Prüfung des Paares von gleichartigen Widerständen 1 und 4 erforderliche Schaltung nach Fig. 2 wird erhalten, wenn die Speisung der Messbrücke einerseits über dem Versorgungsanschluss 5 und andererseits über dem Messanschluss 8 erfolgt. Dadurch erhält man einen Zweig aus der Reihenschaltung der Widerstände 1, 2 und 4 und einen hierzu parallelen Zweig allein aus dem Widerstand 3. Dabei wird zur Erfassung einer Offsetdrift aufgrund einer Veränderung eines der gleichartigen Widerstände 1 oder 4 nur deren Reihenschaltung benötigt, während der zwischengeschaltete andersartige Widerstand 2 diese Erfassung beeinträchtigt. Aus diesem Grund wird der Widerstand 2 durch einen mit den Anschlüssen 6 und 7 verbundenen Schalter 9 überbrückt. Der sich aus der Parallelschaltung des Widerstands 2 und des Schalterwiderstands 10 ergebende Gesamtwiderstand ist abhängig von der Qualität des Schalters 9 normalerweise sehr gering und hat einen im Verhältnis zu den Widerständen 1 und 4 entsprechend niedrigen Wert, so dass er die festzustellende Offsetdrift kaum beeinflusst.

Die Testschaltung umfasst weiterhin einen Spannungsteiler 11 aus zwei in Reihe geschalteten Widerständen 12 und 13 zur Bildung der Bezugsspannung. An den Spannungsteiler 11 ist die Versorgungsspannung VBR der Messbrücke angelegt. Die Widerstände 12 und 13 haben eine sehr geringe Drift bzw. einen sehr geringen Gleichlauffehler. Der Spannungsteiler 11 teilt die Versorgungsspannung VBR in einem festen Verhältnis, so dass die Bezugsspannungsspannung am Verbindungspunkt 14 zwischen den Widerständen 12 und 13 beispielsweise 1/2 VBR beträgt.

Zunächst wird die Testschaltung kalibriert, indem die anfängliche Differenz Ukal$_a$ zwischen der Spannung am Verbindungspunkt 14 und den Spannungen an den Anschlüssen 6 und 7 bestimmt und gespeichert wird. Im späteren Testbetrieb wird geprüft, ob eine Veränderung dieser Differenz gegenüber dem bei der Kalibrierung ermittelten Wert aufgetreten ist. Dabei haben Veränderungen der Messgröße sowie etwaiger Störgrößen wie die Schwankung der Versorgungsspannung oder Temperaturänderungen nur einen sehr geringen Einfluss.

Lässt sich der Schalter 9 bzw. sein Widerstand 10 nicht ausreichend niederohmig realisieren, was bei Halbleiterschaltungen der Fall sein kann, so dass der Spannungsabfall über den überbrückten Widerstand 2 nicht vernachlässigt werden kann, dann ist zunächst ein virtuelles Mittenpotential zu bilden. Dieses entspricht dem Potential, das sich zwischen den Widerständen 1 und 4 einstellen würde, wenn der Wert des Gesamtwiderstands der Widerstände 2 und 10 tatsächlich null wäre.

Für die Schaltung nach Fig. 2 gilt für diese Mittenspannung $U_{MC}$ :

$$\dot{U}_{MC} \approx \frac{U_{BC} + U_{DC}}{2}$$

($U_{BC}$ =  Spannung zwischen den Anschlüssen 7 und 8;

($U_{DC}$ =  Spannung zwischen den Anschlüssen 6 und 8)

Mit $U_{BC} = U_{FC} + U_{BF}$ und $U_{DC} = U_{FC} + U_{DF}$

($U_{FC}$ =  Spannung zwischen dem Verbindungspunkt 14 und dem Anschluss 8;

$U_{BF}$ =  Spannung zwischen dem Anschluss 7 und dem Verbindungspunkt 14;

$U_{DF}$ =  Spannung zwischen dem Verbindungspunkt 14 und dem Anschluss 6)

erhält man:

$$2 \cdot U_{MC} \approx 2 \cdot U_{FC} + U_{BF} + U_{DF}$$

bzw.

$$\textsf{bzw.} \quad 2 \cdot (U_{MC} - U_{FC}) \approx U_{BF} + U_{DF}.$$

Dadurch erhält man aus zwei Differenzspannungsmessungen ($U_{BF}$ und $U_{DF}$) leicht den Wert der "Driftspannung" für die Widerstände 1 und 2.

$$2 \cdot Udrift_a \approx U_{BF} + U_{DF} - Ukal_a$$

Die Berechnung der Mittenspannung $U_{MC}$ anhand von zwei Einzelmessungen kann jedoch ungünstig sein. Dieser Nachteil kann aber durch Verwendung eines weiteren resistiven Teilers aus den Widerständen 15 und 16 (in Fig. 2 strichliert dargestellt) behoben werden. Unter der Annahme, dass die Widerstände 15 und 16 den gleichen Widerstandswert haben, erhält man die Driftspannung direkt aus der Differenz der Spannung $U_{FG}$ (Spannung zwischen dem Verbindungspunkt 14 und dem Verbindungspunkt 17 zwischen den Widerständen 15 und 16) und der Spannung $Ukal_a$.

$$Udrift_a = UFG - Ukal_a$$

Dadurch wird die Driftspannung als Differenzspannung zwischen dem gespeicherten Spannungswert und nur einem gemessenen Spannungswert $U_{FG}$ erhalten. Da ohne die Verwendung des Spannungsteilers 15, 16 die zwei Spannungen $U_{SF}$ und $U_{DF}$ nacheinander gemessen werden müssen, die Messung nur des Spannungswertes $U_{FG}$ andererseits "gleichzeitig" erfolgt, können zufällige Störungen besser unterdrückt werden.

Die Prüfung des Paares von gleichartigen Widerständen 2 und 3 erfolgt mit der Schaltung nach Fig. 3. Hierbei sind einerseits die Reihenschaltung aus dem Widerstand 3, dem störenden Widerstand 1 und dem Widerstand 2 und andererseits nur der Widerstand 4 an die Versorgungsspannung VBR angelegt. Hier wird der Widerstand 1 durch den Schalter 9 überbrückt (da in Fig. 3 für den Schalter 9 ein anderer Schalter als in Fig. 2 verwendet werden kann, kann auch der Wert des Schalterwiderstands 10 in Fig. 3 ein anderer als in Fig. 2 sein). Die Driftspannung wird hier entsprechend der folgenden Beziehung erhalten:

$$2 \cdot Udrift_b \approx U_{AF} + U_{BF} - Ukal_b$$

($U_{AF}$ = Spannung zwischen dem Anschluss 5 und dem Verbindungspunkt 14;
$Ukal_b$ = bei der Kalibrierung der Testschaltung nach Fig. 3 erhaltener Spannungswert)

Wenn auch in der Schaltung nach Fig. 3 der Spannungsteiler 15, 16 verwendet wird, kann die Driftspannung $Udrift_b$ ebenfalls durch Messung nur einer Spannung erhalten werden. Es reichen dann insgesamt zwei Spannungsmessungen aus, um eine Drift hinsichtlich einerseits der Widerstände 1 und 4 ($Udrift_a$) und andererseits der Widerstände 2 und 3 ($Udrift_b$) zu erkennen.

Wie auch bei den bekannten Verfahren können nur Einzelfehler zuverlässig detektiert werden. Zusätzlich können bei diesem Verfahren jedoch auch einige Doppelfehler erkannt werden, sofern die beiden Einzelfehler nicht an einem Paar gleichartiger Widerstände (1, 4 oder 2, 3) auftreten. Bei anderen Mehrfachfehlern (gleichzeitige Drift/Veränderungen an zwei gleichartigen Widerständen) können sich die Abweichungen der beiden untersuchten Widderstände so überlagern, dass kein bzw. nur ein verminderter Anteil der Drift erkannt werden kann.

Zusammengefasst bietet das erfindungsgemäße Verfahren die folgenden Vorteile:

- sehr hohe Empfindlichkeit bezüglich Änderungen der Einzelwiderstände, beispielsweise doppelte Empfindlichkeit gegenüber in der DE 101 33 525 A1 beschriebenen Lösung;

- gegenüber der Lösung nach DE 101 33 525 A1 werden keine Stromquellen benötigt, bei denen schon geringe Unterschiede relativ stark in die Driftermittlung einfließen;

- durch die gute Unterdrückung von Störeinflüssen bei der Driftbestimmung lassen sich schon relativ kleine Offsetänderungen detektieren. Hierdurch können Langzeitdrifteffekte frühzeitig erkannt werden, noch bevor der Sensor völlig ungenau oder gar unbrauchbar wird;

- es sind keine Zusatzinformationen wie aktueller Wert der eigentlich zu messenden physikalischen Größe, Temperatur oder Zustandsinformationen von einem externen Steuergerät notwendig.

**Patentansprüche**

1. Verfahren zur Erfassung einer Offsetdrift bei einer resistiven Wheatstone-Messbrücke, die zwischen einem Messbetrieb und einem Testbetrieb umschaltbar ist, ohne die innere Struktur der Messbrükke zu verändern,
**dadurch gekennzeichnet,**
**dass** im Testbetrieb zwei im Messbetrieb in verschiedenen Brückenzweigen liegende, gleichartig wirkende Sensorwiderstände (1, 4; 2, 3) in Reihe geschaltet werden und ein in der Verbindung dieser Sensorwiderstände (1, 4; 2, 3) auftretender Spannungswert mit einer Bezugsspannung verglichen wird.

2. Verfahren nach Anspruch 1, **dadurch gekennzeichnet, dass** der im Testbetrieb zwischen den beiden in Reihe geschalteten, gleichartig wirkenden Sensorwiderständen liegende, andersartig wirkende Sensorwiderstand überbrückt wird.

**3.** Verfahren nach Anspruch 1 oder 2, **dadurch gekennzeichnet, dass** im Testbetrieb ein zwischen den beiden in Reihe geschalteten, gleichartig wirkenden Sensorwiderständen bestehender Widerstand durch rechnerische Ermittlung einer Mittenspannung zwischen den gleichartig wirkenden Sensorwiderständen kompensiert wird.

**4.** Verfahren nach einem der Ansprüche 1 bis 3, **dadurch gekennzeichnet, dass** die Bezugsspannung durch resistive Teilung der an die Reihenschaltung der Sensorwiderstände gelegten Spannung gebildet wird.

**5.** Verfahren nach einem der Ansprüche 1 bis 4, **dadurch gekennzeichnet, dass** der Testbetrieb derart umschaltbar ist, dass die beiden Paare von jeweils gleichartig wirkenden Sensorwiderständen (1, 4; 2, 3) nacheinander geprüft werden.

**Claims**

**1.** Method for recording an offset drift of a resistive Wheatstone measuring bridge that can be switched between a measuring operation and a test operation without changing the inner structure of the measuring bridge, **characterised in that** two sensor resistors (1, 4; 2, 3) lying on different measuring branches with identical function during the measuring operation are switched in series during the test operation, and **in that** a voltage value occurring upon connection of these sensor resistors (1, 4; 2, 3) is compared with a reference voltage.

**2.** Method according to Claim 1, **characterised in that** the sensor resistor lying between the two differently functioning sensor resistors with identical function switched in series during the test operation is bridged.

**3.** Method according to Claim 1 or 2, **characterised in that** a resistor located between the two sensor resistors switched in series with identical function is compensated by mathematical detection of a median voltage between the sensor resistors with identical function during the test operation.

**4.** Method according to one of the Claims 1 to 3, **characterised in that** the reference voltage is generated by resistive division of the voltage occurring upon switching the sensor resistors in series.

**5.** Method according to one of the Claims 1 to 4, **characterised in that** the test operation can be switched in such a way that the two pairs of sensor resistors (1,4; 2,3) each with identical function are tested one after the other.

**Revendications**

**1.** Procédé de détection d'une dérive pour un pont de Wheatstone résistif qui peut commuter entre un mode de mesure et un mode d'essai sans modifier la structure interne du pont de Wheatstone, **caractérisé en ce qu'**en mode d'essai, deux résistances de capteur (1, 4 ; 2, 3) à effet identique, situées dans des branches de pont différentes en mode de mesure, sont connectées en série et qu'une valeur de tension apparaissant dans la connexion de ces résistances de capteur (1, 4 ; 2, 3) est comparée à une tension de référence.

**2.** Procédé selon la revendication 1, **caractérisé en ce que** la résistance de capteur à effet différent, située en mode d'essai entre les résistances de capteur à effet identique, connectées en série, est pontée.

**3.** Procédé selon la revendication 1 ou 2, **caractérisé en ce qu'**en mode d'essai, une résistance existant entre les deux résistances de capteur à effet identique, connectées en série, est compensée par une détermination mathématique d'une moyenne tension entre les résistances de capteur à effet identique.

**4.** Procédé selon l'une quelconque des revendications 1 à 3, **caractérisé en ce que** la tension de référence est formée par une division résistive de la tension appliquée à la connexion série des résistances de capteur.

**5.** Procédé selon l'une quelconque des revendications 1 à 4, **caractérisé en ce que** le mode d'essai peut être commuté de telle sorte que les deux paires de résistances de capteur à effet identique (1, 4 ; 2, 3) respectivement sont testées successivement.

Fig. 1

Fig. 2

Fig. 3

EP 1 586 909 B1